(19) Europäisches Patentamt / European Patent Office / Office européen des brevets

(11) **EP 2 869 086 B1**

(12) **FASCICULE DE BREVET EUROPEEN**

(45) Date de publication et mention
de la délivrance du brevet:
**12.07.2017 Bulletin 2017/28**

(51) Int Cl.:
***G01S 19/21*** *(2010.01)*

(21) Numéro de dépôt: **14190295.7**

(22) Date de dépôt: **24.10.2014**

(54) **Procédé de détection d'interférences dans un signal de radio-navigation par satellite basé sur la surveillance d'un coefficient de corrélation temporel**

Verfahren zur Erfassung von Interferenzen in einem Funk-Navigationssignal über Satellit, das auf der Überwachung eines zeitlichen Korrelationskoeffizienten beruht

Method for detecting interference in a satellite radio-navigation signal based on monitoring a time correlation coefficient

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2013 FR 1302522**

(43) Date de publication de la demande:
**06.05.2015 Bulletin 2015/19**

(73) Titulaire: **Thales**
**92400 Courbevoie (FR)**

(72) Inventeurs:
• **Revol, Marc**
**26120 UPIE (FR)**
• **Pietin, David**
**33187 LE HAILLAN Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**EP-A1- 2 520 949    DE-A1-102006 001 794**
**FR-A1- 2 984 524**

• **DANAI SKOURNETOU ET AL: "Non-coherent multiple correlator delay structures and their tracking performance for Galileo signals", PROCEEDINGS OF THE EUROPEAN NAVIGATION CONFERENCE (ENC-GNSS '07), GENEVA, SWITZERLAND, MAY-JUNE 2007., 1 mai 2007 (2007-05-01), - juin 2007 (2007-06), pages 1-12, XP055119272,**

## Description

La présente invention concerne le domaine des systèmes de radio-navigation par satellite et plus précisément les récepteurs de signaux de radio-navigation par satellite.

L'invention porte sur un procédé de détection d'interférences dans un signal de radio-navigation par satellite reçu par un tel récepteur.

Lorsque le signal de radio-navigation est superposé à un signal interférant bande étroite, cela a pour effet d'engendrer des erreurs de mesure qui impactent les calculs de temps et de position effectués par le récepteur et in fine entrainent une erreur de positionnement.

Il est donc important de pouvoir détecter la présence d'interférence dans le signal de radio-navigation reçu afin de pouvoir apporter des traitements correctifs ou d'exclure les mesures effectuées en présence d'interférence.

Les solutions connues au problème précité sont basées sur la détection d'une mesure aberrante par rapport à une moyenne ou un écart attendu.

Ces solutions présentent l'inconvénient de nécessiter un temps de détection trop important entre l'instant ou l'interférence apparait et l'instant où elle est effectivement détectée.

On connait par ailleurs le document EP2520949 qui traite du domaine de l'incidence des trajets multiples pour les récepteurs GNSS.

L'invention propose une méthode de détection d'interférences basée sur l'exploitation de l'intercorrélation entre au moins deux mesures de corrélations décalées temporellement d'au moins la durée d'un créneau du code d'étalement par rapport au maximum de la fonction de corrélation afin d'identifier la présence d'interférences pour laquelle cette intercorrélation présente une valeur significative.

L'invention peut être exécutée par un récepteur de positionnement par satellite lors de la phase de poursuite du signal de radio-navigation.

L'invention a pour objet un procédé de détection d'interférences dans un signal de radio-navigation par satellite caractérisé en ce qu'il comporte les étapes suivantes :

- Déterminer (201) la position temporelle pour laquelle la corrélation entre un code d'étalement local et ledit signal décalé de ladite position est maximum,
- Calculer (202) une information représentative de l'intercorrélation entre au moins une première mesure de la corrélation entre le code d'étalement local et ledit signal décalé d'une première position temporelle en avance de la position temporelle dudit maximum d'une durée supérieure à la durée d'un créneau du code d'étalement et une seconde mesure de la corrélation entre le code d'étalement local et ledit signal décalé à une seconde position temporelle en retard de la position temporelle dudit maximum d'une durée supérieure à la durée d'un créneau du code d'étalement,
- Comparer (203) ladite information à un seuil de détection configuré au moins en fonction du rapport des puissances du signal et de l'interférence.

Selon un aspect particulier de l'invention, ladite information est déterminée en calculant l'intercorrélation entre ladite première mesure et ladite seconde mesure normalisée par la somme entre l'autocorrélation de ladite première mesure et l'autocorrélation de ladite seconde mesure.

Selon un aspect particulier de l'invention, le décalage temporel entre la première position temporelle et la position temporelle dudit maximum d'une part et entre la seconde position temporelle et la position temporelle dudit maximum d'autre part sont sensiblement égaux en valeur absolue.

Selon un aspect particulier de l'invention, ladite étape de calcul d'une information représentative de l'intercorrélation est réalisée pour un nombre supérieur à deux de mesures de la corrélation dudit signal avec un code d'étalement local à une pluralité de positions temporelles en avance ou en retard de la position temporelle dudit maximum d'une durée supérieure à la durée d'un créneau du code d'étalement.

L'invention a également pour objet un dispositif de réception de signaux de radio-navigation par satellite comprenant des moyens configurés pour mettre en oeuvre le procédé de détection d'interférences selon l'invention.

D'autres caractéristiques et avantages de la présente invention apparaîtront mieux à la lecture de la description qui suit en relation aux dessins annexés qui représentent :

- La figure 1, un synoptique d'un dispositif de réception de signaux de radio-navigation adapté pour mettre en oeuvre le procédé selon l'invention,
- La figure 2, un organigramme décrivant les étapes de mise en oeuvre du procédé de détection d'interférences selon l'invention.

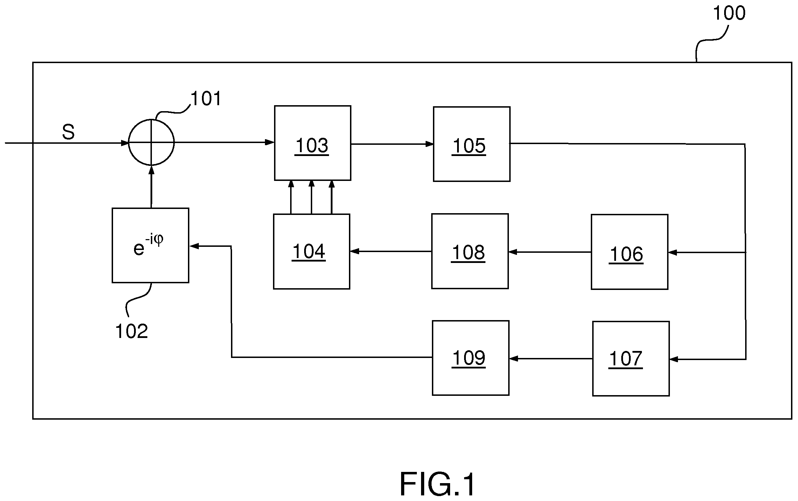

La figure 1 représente un synoptique d'un dispositif de réception de signaux de radio-navigation adapté pour mettre en oeuvre le procédé selon l'invention.

Un tel dispositif 100 est basé sur un récepteur de signaux de radio-navigation usuel qui comporte notamment les fonctionnalités suivantes. Le signal reçu S est démodulé en phase par l'intermédiaire d'un démodulateur 101 et d'une porteuse locale 102. Le signal S démodulé est ensuite transmis à un corrélateur 103 pour effectuer une corrélation du signal S avec un code d'étalement généré localement 104. Avantageusement, plusieurs corrélations sont réalisées avec des retards différents à chaque fois. Typiquement, trois corrélations peuvent être réalisées, l'une à un instant temporel donné, l'une en avance de cet instant et la dernière en retard de ce même instant, les décalages avance et retard du signal reçu étant de durée inférieure à la durée d'un créneau du code d'étalement, un créneau étant encore appelé « chip » selon une désignation anglo-saxonne bien connue.

Selon l'invention, deux corrélations additionnelles peuvent être réalisées, la première avec une avance supérieure à la durée d'un créneau du code d'étalement, la seconde avec un retard supérieur à la durée d'un créneau du code d'étalement.

Le résultat des deux corrélations additionnelles est fourni à un module 105 de détection d'interférences selon l'invention qui exécute un procédé décrit plus loin dans le texte.

Le dispositif 100 comporte également un discriminateur de code 106 et un opérateur de contrôle numérique NCO 108 pour piloter la génération du code local, en particulier l'instant temporel auquel est réalisé la corrélation principale.

Le dispositif 100 peut comporter également un discriminateur de phase 107 et un opérateur de contrôle numérique NCO 109 pour piloter la génération de la porteuse locale 102, autrement dit la valeur du déphasage à imprimer au signal reçu S.

Le dispositif 100 selon l'invention peut comporter toute autre fonctionnalité habituellement implémentée dans un récepteur de signaux de radio-navigation par satellite. Les éléments décrits sur la figure 1 peuvent également être remplacés par toute autre fonction équivalente.

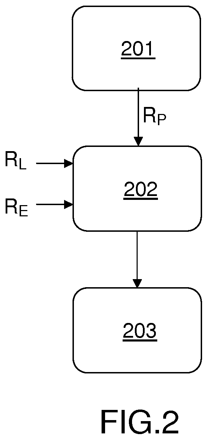

Le procédé selon l'invention comprend, comme illustré sur l'organigramme de la figure 2 principalement trois étapes.

Dans une première étape 201, on détermine, à partir des résultats de corrélation fournis par le module 103, le maximum $R_P$ de la fonction de corrélation entre le code d'étalement généré localement et le signal reçu décalé temporellement d'un retard variable. On retient la position temporelle associée à ce maximum de corrélation qui correspond, en l'absence d'interférence, à l'instant où le signal reçu et le code d'étalement sont correctement synchronisés. Cette première étape 201 du procédé selon l'invention est implémentée par un récepteur de signaux de radio-navigation selon l'art antérieur dans le but de déterminer une information de positionnement.

Dans une deuxième étape 202, on détermine deux mesures de corrélation supplémentaires. La première mesure de corrélation $R_E$ est déterminée en décalant le signal reçu d'une durée positive au moins égale à la durée d'un créneau du code d'étalement par rapport à la position temporelle du maximum $R_P$ de la fonction de corrélation. La seconde mesure de corrélation $R_L$ est déterminée en décalant le signal reçu d'une durée négative au moins égale à la durée d'un créneau du code d'étalement par rapport à la position temporelle du maximum $R_P$ de la fonction de corrélation.

Avantageusement les retards appliqués pour calculer les deux mesures supplémentaires de corrélation sont égaux en valeur absolue mais de signes opposés.

En l'absence d'interférences dans la bande de fréquence du signal de radio-navigation reçu, le calcul de corrélation entre le code d'étalement local et le signal reçu avec un décalage supérieur à la durée d'un créneau donne un résultat sensiblement nul. En effet, dans un tel cas, le signal n'est pas correctement synchronisé avec le code d'étalement local et leur corrélation ne produit pas le pic d'amplitude attendu.

De plus, deux mesures de corrélation réalisées avec un décalage temporel supérieur, en valeur absolue, à la durée d'un créneau du code d'étalement, produisent des résultats décorrélés car en dehors du support temporel de la fonction de corrélation, ni le signal utile ni le bruit thermique ne sont corrélés temporellement.

En présence d'un signal interférent au contraire, ces deux mesures de corrélation présentent une intercorrélation non nulle car la fréquence du signal interférent est a priori différente de celle du signal de radio-navigation par satellite.

En mesurant le niveau d'intercorrélation entre les deux corrélateurs calculés à l'étape 202, il est possible d'en déduire un indicateur de la présence d'interférences.

Pour cela, on calcule donc une information représentative de l'intercorrélation entre les mesures $R_E$ et $R_L$.

Cette information peut être obtenue à l'aide de la relation suivante, où l'opérateur * désigne l'opérateur complexe conjugué :

$$\gamma = \frac{\sum_{k=0}^{K} R_E(kT).R_L{}^*(kT)}{\sum_{k=0}^{K} R_E(kT).R_E{}^*(kT) + \sum_{k=0}^{K} R_L(kT).R_L{}^*(kT)}$$

La normalisation de l'intercorrélation par la somme des énergies des deux mesures de corrélation permet d'obtenir un indicateur de valeur stable.

Lorsqu'aucun signal interférent n'est présent dans la bande utile du signal reçu, l'intercorrélation et donc l'indicateur d'interférence présente une valeur faible.

Au contraire, lorsqu'un signal interférent est présent dans la bande utile, et quelle que soit sa puissance, l'indicateur d'interférence présente une valeur plus élevée, stabilisée de part la normalisation en énergie.

Dans une troisième étape 203, l'indicateur $\gamma$ est comparé à un seuil de détection d'interférences $S_{DET}$ configuré en fonction du rapport des puissances entre le signal utile et le signal interférant. Si l'indicateur $\gamma$ est supérieur au seuil de détection $S_{DET}$ alors on conclut à la présence d'interférence.

Des variantes de réalisation du procédé selon l'invention comprennent notamment l'utilisation d'un nombre N supérieur à deux de mesures de corrélation, en des positions temporelles décalées d'au moins la durée d'un créneau par rapport à la position temporelle du maximum de corrélation.

Dans ce cas, l'intercorrélation entre deux mesures de corrélation est remplacée par un calcul d'intercorrélation à N dimensions entre N mesures de corrélation.

Dans les différentes variantes de réalisation du dispositif 100 selon l'invention, les modules de calcul peuvent être agencés selon différentes architectures, en particulier chaque étape du procédé selon l'invention peut être implémentée par un module distinct ou au contraire les deux étapes peuvent être regroupées au sein d'un module de calcul unique.

Chacun des modules de calcul que comporte le dispositif selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

## Revendications

1. Procédé de détection d'interférences dans un signal de radio-navigation par satellite **caractérisé en ce qu'**il comporte les étapes suivantes :

   • Déterminer (201) la position temporelle pour laquelle la corrélation entre un code d'étalement local et ledit signal décalé de ladite position est maximum,
   • Calculer (202) une information représentative de l'intercorrélation entre au moins une première mesure de la corrélation entre le code d'étalement local et ledit signal décalé d'une première position temporelle en avance de la position temporelle dudit maximum d'une durée supérieure à la durée d'un créneau du code d'étalement et une seconde mesure de la corrélation entre le code d'étalement local et ledit signal décalé à une seconde position temporelle en retard de la position temporelle dudit maximum d'une durée supérieure à la durée d'un créneau du code d'étalement,
   • Comparer (203) ladite information à un seuil de détection configuré au moins en fonction du rapport des puissances du signal et de l'interférence.

2. Procédé de détection d'interférences selon la revendication 1 dans lequel ladite information est déterminée en calculant l'intercorrélation entre ladite première mesure et ladite seconde mesure normalisée par la somme entre l'autocorrélation de ladite première mesure et l'autocorrélation de ladite seconde mesure.

3. Procédé de détection d'interférences selon l'une des revendications 1 ou 2 dans lequel le décalage temporel entre la première position temporelle et la position temporelle dudit maximum d'une part et entre la seconde position temporelle et la position temporelle dudit maximum d'autre part sont sensiblement égaux en valeur absolue.

4. Procédé de détection d'interférences selon l'une des revendications précédentes dans lequel ladite étape (202) de calcul d'une information représentative de l'intercorrélation est réalisée pour un nombre supérieur à deux de mesures de la corrélation dudit signal avec un code d'étalement local à une pluralité de positions temporelles en avance ou en retard de la position temporelle dudit maximum d'une durée supérieure à la durée d'un créneau du code d'étalement.

5. Dispositif (100) de réception de signaux de radio-navigation par satellite comprenant des moyens (105) configurés pour mettre en oeuvre le procédé de détection d'interférences selon l'une des revendications 1 à 4.

## Patentansprüche

1. Verfahren zum Erkennen von Interferenzen in einem Satellitenfunknavigationssignal, **dadurch gekennzeichnet, dass** es die folgenden Schritte beinhaltet:

   • Bestimmen (201) der zeitlichen Position, für die die Korrelation zwischen einem lokalen Spreizcode und dem versetzten Signal der Position maximal ist,
   • Berechnen (202) einer Information, die die Interkorrelation zwischen mindestens einer ersten Messung der Korrelation zwischen dem lokalen Spreizcode und dem versetzten Signal einer ersten zeitlichen Position vor der zeitlichen Position des Maximums mit einer Dauer, die größer als die Dauer eines Schlitzes des Spreizcodes ist, und einer zweiten Messung der Korrelation zwischen dem lokalen Spreizcode und dem versetzten Signal repräsentiert, das von einer zweiten zeitlichen Position hinter der zeitlichen Position des Maximums mit einer Dauer, die größer als die Dauer eines Schlitzes des Spreizcodes ist;
   • Vergleichen (203) der Information mit einer Erkennungsschwelle, die mindestens in Abhängigkeit des Verhältnisses der Leistungen des Signals und der Interferenz konfiguriert ist.

**2.** Verfahren zum Erkennen von Interferenzen nach Anspruch 1, wobei die Information durch Berechnen der Interkorrelation zwischen der ersten Messung und der zweiten Messung bestimmt wird, normalisiert durch die Summe zwischen der Autokorrelation der ersten Messung und der Autokorrelation der zweiten Messung.

**3.** Verfahren zum Erkennen von Interferenzen nach Anspruch 1 oder 2, wobei der zeitliche Versatz zwischen der ersten zeitlichen Position und der zeitlichen Position des Maximums einerseits und zwischen der zweiten zeitlichen Position und der zeitlichen Position des Maximums andererseits nach absolutem Wert im Wesentlichen gleich sind.

**4.** Verfahren zum Erkennen von Interferenzen nach einem der vorherigen Ansprüche, wobei der Schritt (202) des Berechnens einer die Interkorrelation repräsentierenden Information für mehr als zwei Messungen der Korrelation des Signals mit einem lokalen Spreizcode an mehreren zeitlichen Positionen vor oder hinter der zeitlichen Position des Maximus mit einer Dauer größer als die Dauer eines Schlitzes des Spreizcodes berechnet wird.

**5.** Vorrichtung (100) zum Empfangen von Satellitenfunknavigationssignalen, die Mittel (105) umfasst, die konfiguriert sind um das Verfahren zum Erkennen von Interferenzen nach einem der Ansprüche 1 bis 4 zu implementieren.

**Claims**

**1.** Method for detecting occurrences of interference in a satellite radio-navigation signal, **characterised in that** it comprises the following steps:

• determining (201) the temporal position for which the correlation between a local spreading code and the offset signal of the position is at a maximum,
• calculating (202) information which is representative of the intercorrelation between at least a first measurement of the correlation between the local spreading code and the offset signal of a first temporal position in advance of the temporal position of the maximum having a duration greater than the duration of a slot of the spreading code and a second measurement of the correlation between the local spreading code and the offset signal at a second temporal position behind the temporal position of the maximum having a duration greater than the duration of a slot of the spreading code,
• comparing (203) the information with a detection threshold which is configured at least as a function of the ratio of the power levels of the signal and the interference.

**2.** Method for detecting occurrences of interference according to claim 1, wherein the information is determined by calculating the intercorrelation between the first measurement and the second measurement standardised by the sum between the autocorrelation of the first measurement and the autocorrelation of the second measurement.

**3.** Method for detecting occurrences of interference according to either claim 1 or 2, wherein the temporal offset between the first temporal position and the temporal position of the maximum, on the one hand, and between the second temporal position and the temporal position of the maximum, on the other hand, are substantially equal in terms of absolute value.

**4.** Method for detecting occurrences of interference according to any one of the preceding claims, wherein the step (202) of calculating information which is representative of the intercorrelation is carried out for a number greater than two of measurements of the correlation of the signal with a local spreading code at a plurality of temporal positions in advance of or behind the temporal position of the maximum having a duration greater than the duration of a slot of the spreading code.

**5.** Device (100) for receiving satellite radio-navigation signals comprising means (105) which are configured to implement the method for detecting occurrences of interference according to any one of claims 1 to 4.

FIG.1

FIG.2

**EP 2 869 086 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2520949 A